# EUROPÄISCHE PATENTSCHRIFT

(11) **EP 3 473 107 B1**
(45) Veröffentlichungstag und Bekanntmachung des Hinweises auf die Patenterteilung: **28.04.2021**
(21) Anmeldenummer: 18000815.3
(22) Anmeldetag: 17.10.2018
(51) Int. Cl.: A23G 1/12, A23G 1/00

(54) **VORRICHTUNG UND VERFAHREN ZUM BE- UND VERARBEITEN VON SCHOKOLADE SOWIE VERWENDUNG EINER UNIVERSALMASCHINE DAFÜR**
DEVICE AND METHOD FOR WORKING OR PROCESSING CHOCOLATE AND USE OF A UNIVERSAL MACHINE FOR SAME
DISPOSITIF ET PROCÉDÉ DE TRAITEMENT ET DE TRANSFORMATION DU CHOCOLAT AINSI QU'UTILISATION D'UNE MACHINE UNIVERSELLE LORS DUDIT PROCÉDÉ

(30) Priorität: 17.10.2017 DE 202017005365 U
(43) Veröffentlichungstag der Anmeldung: 24.04.2019
(73) Patentinhaber: Stephan Machinery GMBH, 31789 Hameln (DE)
(72) Erfinder: BROCKMANN, Gerhard, 31855 Aerzen (DE)
(74) Vertreter: Reichert & Lindner Partnerschaft Patentanwälte

(56) Entgegenhaltungen:
- EP-A1- 1 576 888
- WO-A1-2016/115557
- DE-B- 1 128 271

## Beschreibung

Die Erfindung betrifft eine Vorrichtung zum Be- und Verarbeiten von Schokolade sowie ein Verfahren zum Be- und Verarbeiten von Schokolade. Im Rahmen der Erfindung liegt außerdem auch eine Verwendung von Universalmaschinen für die Nahrungs- und Lebensmittelbe- und -verarbeitung, d.h. insbesondere Heiz-, Misch-, Rühr-, Knet- und Zerkleinerungsgeräte und dergleichen, zum Be- und Verarbeiten von Schokolade.

Um Schokoladenmasse mit hoher Qualität herzustellen ist es aus der Praxis bekannt, diese Schokoladenmasse zu conchieren. Das Conchieren erfolgt in einem muschelförmigen Behälter, der so genannten Conche (das Lateinische "concha" bedeutet "Muschel"). Darin wird das insbesondere durch Feinwalzen entstandene Schokoladenpulver kräftig geknetet, gemischt, durchlüftet und schließlich verflüssigt.

Bei einem so genannten Trockenconchieren, das eine erste Conchier-Phase darstellt, wird der Wassergehalt reduziert, entweichen unerwünschte Aromakomponenten und bilden sich neue Aromen. Dabei wird das noch feinkrümelige Walzgut in großen Conchen stetig umgewälzt, wobei Reibungswärme entsteht und eine zusätzliche Beheizung erfolgt, so dass die enthaltene Kakaobutter zu schmelzen beginnt und das pulverförmige Walzgut eine körnige, krümelige Struktur erhält. Es folgt eine Verarbeitungsphase, in der die Schokolade allmählich zähflüssig wird, die durch anschließende Zugabe von insbesondere Kakaobutter und Lezithin noch fließfähiger wird, so dass die Verflüssigungsphase einsetzt, in der alle Nichtfettstoffe, wie z.B. Zucker und fettfreies Milchpulver, vollständig mit Kakaobutter umhüllt werden. Dabei ist die Einhaltung eines exakten Temperaturverlaufs sehr wichtig, da sich sonst Klümpchen bilden können. Danach wird die fertige Schokoladenmasse vorzugsweise auf ca. 45°C abgekühlt und in großen Tanks unter sanftem Rühren bis zur Weiterverarbeitung zwischengelagert

Bei der konventionellen Schokoladenherstellung ist das abschließende Conchieren die letzte Bearbeitungsstufe, also eine abschließende Conchier-Phase. Hier entwickelt sich der spezifische Schokoladengeschmack und die Aromen aller Inhaltsstoffe können sich in der Schokoladenmasse voll entfalten. Dieser Veredelungsprozess kann je nach Schokoladensorte bis zu 24 Stunden dauern.

In Produktionsanlagen, die ausschließlich für die Schokoladenherstellung dienen, sind für das abschließende Conchieren spezielle Vorrichtungen oder Maschinen vorhanden und können auch ausgelastet werden. Es besteht jedoch auch ein Bedarf in Unternehmen der Nahrungsmittelindustrie, die sich mit der Verarbeitung unterschiedlicher Nahrungsmittel und Rohstoffe sowie der Herstellung verschiedener Speisen und Getränke mit insbesondere Heiz-, Misch-, Rühr-, Knet- und Zerkleinerungsgeräten und dergleichen, befassen, hier auch ohne Spezialgeräte, also konkret reine Conchen, auszukommen und schon vorhandene oder grundsätzlich vielseitige Vorrichtungen und Geräte einsetzen zu können. Aber auch reine Schokoladenherstellungsbetriebe haben einen Bedarf, auch andere Nahrungsmittel und Rohstoffe zu verarbeiten und beispielsweise als Füllungen von Schokoladenprodukten unterschiedliche nicht schokoladige Cremes und Pasten herzustellen, was mit reinen Conchen nicht möglich ist.

Aus der WO 2016/115557 A1 ist ein Schokoladenverarbeitungssystem zum Be- und Verarbeiten von Schokolade bekannt und enthält einen Behälter und darin angeordnete Rühreinrichtungen, wobei der Behälter einen Bearbeitungsinnenraum mit einer zylindrischen Wand und einen nach außen gewölbten Boden hat, wobei die Rühreinrichtungen wenigstens einen Rührarm, der von der Zentralachse des zylindrischen Behälters zumindest auch in radialer Richtung vorstehend um diese Zentralachse drehbar ist, und ein Conchierwerkzeug enthalten, das am oder nahe dem Boden oder des bezogen auf die Vertikale tiefsten Punktes des Behälters um eine Drehachse drehbar angeordnet ist, und wobei sich das Conchierwerkzeug im Betrieb schneller dreht als der Rührarm.

Die DE 11 28 271 B offenbart eine Maschine zum Versalben von Schokoladenmasse mit einer um eine schräge Achse umlaufenden, oben offenen Trommel und einer darin gegensinnig drehbaren, auf einer gemeinsamen Welle angeordneten, aus Abstreifer, Aufteilmesser und Hubschnecke bestehenden Mischvorrichtung, wobei ferner die parallel zur Welle liegenden Aufteilmesser in einem Abstand von 120° versetzt dem Abstreifer nachgeordnet sind, das dem Trommelboden zugekehrte Ende der Hubschnecke etwa in der gleichen senkrecht zum Trommelboden stehenden Ebene mit den Aufteümessern liegt und bei Beginn des Mischungs- bzw. Versalbungsvorganges sich der Abstreifer bei ausgekuppelter Welle der Mischvorrichtung im höchsten Punkt der Schräglage der Trommel befindet.

Eine Vorrichtung zum Raffinieren von Rohstoffen, insbesondere zur Verwendung beim Raffinieren von Schokolade ist in der EP 1 576 888 A1 offenbart, wobei die Vorrichtung eine Trommel umfasst, in der eine Antriebswelle montiert ist, die einen Rotor trägt, wobei der Rotor mit mindestens einem Mahlstange versehen ist, wobei die Trommel an ihrer Innenfläche mit mindestens einer entsprechenden Mahlstange versehen ist und ferner Mittel zum Umwälzen der Rohmaterialien in der Trommel vorgesehen sind.

Die Erfindung hat zum Ziel, zum Be- und Verarbeiten von Schokolade eine Vorrichtung zu schaffen, die leicht umgestellt und/oder umgebaut werden kann, um auch andere unterschiedliche Nahrungsmittel und Rohstoffe be- und verarbeiten zu können, sowie bei der Herstellung verschiedener Speisen und Getränke eingesetzt werden kann.

Dieses Ziel wird mit einer Vorrichtung zum Be- und Verarbeiten von Schokolade nach Anspruch 1 erreicht.

Das gegenüber dem Rührarm schnelllaufende Conchierwerkzeug sorgt für einen schnellen und hohen Eintrag von Reibungs- und Scherenergie und damit eine Erwärmung und Verflüssigung (Schmelzen) der Schokoladenmasse. Für die Behandlung anderer Nahrungsmittel und Rohstoffe als Schokolade kann das Conchierwerkzeug auf einfache Weise z.B. durch ein Messer ersetzt werden. Der Rührarm ist beim Be- und Verarbeiten von Schokolade in Zusammenhang mit dem schrägstehenden Behälter zuständig für das Mischen, Kneten (Schwappen) und Belüften der Schokoladenmasse, kann aber ohne weitere Veränderungen auch zum Mischen, Kneten (Schwappen) und Belüften anderer Nahrungsmittel und Rohstoffe verwendet werden. Die Produktmasse oder Schokoladenmasse oder Teile davon werden über jeden Rührarm gehoben und fallen durch die Schwerkraft wieder in die Restmasse zurück. Weiterhin enthält das Conchierwerkzeug eine drehbare Klinge, die ohne erforderliche Umbauten in vorteilhafter Weise auch bei der Be- und Verarbeitung von anderen unterschiedlichen Nahrungsmitteln und Rohstoffen sowie bei der Herstellung verschiedener Speisen und Getränke eingesetzt werden kann.

Die Drehachse des Conchierwerkzeugs und die Drehachse des Rührarms oder der Rührarme, die mit der Zentralachse des Behälters zusammenfällt, sind insbesondere nicht parallel.

Noch eine weitere vorzugsweise Ausgestaltung besteht darin, dass das Conchierwerkzeug tiefer in dem Behälter angeordnet ist als jeder Rührarm. Insbesondere ist das Conchierwerkzeug in dem schrägstehenden Behälter am oder nahe dem tiefsten Punkt bezogen auf die Vertikale angeordnet.

Vorzugsweise sind mehrere Rührarme, insbesondere drei Rührarme umfangsmäßig insbesondere gleichverteilt enthalten. Alternativ oder zusätzlich ist es bevorzugt, wenn jeder Rührarm mit Misch-/Zerteilwerkzeugen versehen ist, die aus der Drehebene des Rührarms vorstehen. Vorteilhafterweise enthält jeder Rührarm an seinem achsenfernen Ende zur zylindrischen Wand des Behälters hin einen Abstreifer, der insbesondere ausgelegt ist, um an der Innenseite der zylindrischen Wand entlang zu streifen und in dem Bebälter enthaltenes Produkt von dieser Innenseite der zylindrischen Wand abzustreifen oder abzuschaben.

Durch die Misch-/Zerteilwerkzeuge und/oder den Abstreifer wird in Zusammenhang mit dem schrägstehenden Behälter das Mischen, Kneten (Schwappen) und Belüften der Schokoladenmasse durch die Drehbewegung jedes Rührarms weiter verbessert, kann aber ohne weitere Veränderungen auch zum Mischen, Kneten (Schwappen) und Belüften anderer Nahrungsmittel und Rohstoffe verwendet werden. Die Produktmasse oder Schokoladenmasse oder Teile davon werden zusätzlich über die Mischwerkzeuge und Abstreifer oder Abstreiferpaddel gehoben und fallen durch die Schwerkraft wieder in die Restmasse zurück.

An der drehbaren Klinge des Conchierwerkzeugs sind weiter bevorzugt Rippengestaltungen oder Rippen vorgesehen, die aus der Drehebene des Conchierwerkzeugs vorstehen. Weiterhin kann mit Vorzug vorgesehen sein, dass die Rippen zur Tangente an jedem von ihnen bei der Drehbewegung der Klinge beschriebenen Kreis unter einem Winkel, insbesondere einem spitzen Winkel angeordnet sind, so dass sie bei der Drehung der Klinge die sie umgebende Schokoladenmasse radial auswärts drängen. Alternativ oder zusätzlich können die Rippen- oder Steggestaltungen in ihrem Längs verlauf plan, wellig oder gestuft sein und/oder glatte oder profilierte freie von der jeweiligen Klinge weg weisende Ränder haben. Noch weiter können die Rippen parallel oder unter Winkeln zu einander angeordnet sein.

Weiterhin bevorzugt ist es, wenn die Klinge des Conchierwerkzeugs beiderseits ihrer Drehachse in diametral von letzterer weg verlaufenden Klingenannen verläuft. Ferner können noch weiter vorzugsweise zwei Klingen insbesondere in einer Kreuzanordnung enthalten und in axialer Richtung der Drehachse des Conchierwerkzeugs beabstandet oder benachbart angeordnet sein.

Vorteilhafterweise enthält der Behälter auch einen zwischen einer Schließstellung und Offenstellungen verstellbaren Deckel, der ein dichtes Abschließen des Behälters ermöglicht, so dass Einflüsse von Außenluft, Außentemperatur u.a. reduziert oder vermieden werden können.

Eine Beschickung des Behälters der Vorrichtung zum Be- und Verarbeiten von Schokolade erfolgt über ggf. den geöffneten Deckel oder Zufuhrsysteme. Die Entleerung wird bevorzugt über ein Bodensitzventil im oder nahe dem Boden des Behälters erreicht. Über eine Vakuumanlage können dem Produkt Geruchs-, Bitter- und Aromakomponenten entzogen werden. Auch kann der Behälter heizbar oder allgemein temperierbar sein. Für jegliche Komponenten und Funktionen der Vorrichtung können Steuerungen oder eine zentrale Steuerung vorgesehen sein.

Durch die Erfindung wird durch den bestimmungs- und bauartgemäßen Betrieb der erfindungsgemäßen Vorrichtung zum Be- und Verarbeiten von Schokolade auch ein Verfahren zum Be- und Verarbeiten von Schokolade nach Anspruch 13 geschaffen. Da die Vorrichtung zum Be- und Verarbeiten von Schokolade auf einer Universalmaschine zum Be- und Verarbeiten von auch anderen Nahrungsmitteln und Rohstoffen basiert, kann eine solche Universalmaschine durch einfache Gestaltung oder Anpassung der Steuerung und/oder Verwendung eines Conchierwerkzeugs anstelle von z.B. Messern als Vorrichtung zum Be- und Verarbeiten von Schokolade verwendet werden.

Bei dem erfindungsgemäßen Verfahren nach Anspruch 13 wird eine Ausgangsmasse oder ein Zwischenprodukt von Schokolade in einem schrägstehenden zylindrischen Behälter gefüllt und darin einerseits mit wenigstens einem Rührarm, der sich von der Zentralachse des zylindrischen Behälters zumindest auch in radialer Richtung vorstehend um diese Zentralachse dreht, und andererseits gleichzeitig mittels eines drehbaren Conchierwerkzeugs bearbeitet, das sich um eine gegenüber der Zentralachse des zylindrischen Behälters geneigte Drehachse schneller als der wenigstens eine Rührarm dreht, wobei ferner der Behälter schräg aufgestellt ist, d.h. die Zentralachse der zylindrischen Wand gegenüber der Vertikalen geneigt ist, und dass das Conchierwerkzeug eine drehbare Klinge enthält. Vorteilhafte weitere Ausgestaltungen dieses Verfahrens ergeben sich durch Anwendung und Umsetzung der verschiedenen Ausgestaltungen der Vorrichtung zum Be- und Verarbeiten von Schokolade.

Weiterhin wird durch die vorliegende Erfindung eine Verwendung einer Universalmaschine für die Nahrungs- und Lebensmittelbe- und -verarbeitung, zum Be- und Verarbeiten von Schokolade nach Anspruch 15 geschaffen, wobei die Universahnaschine gemäß der erfindungsgemäßen Vorrichtung mit den Merkmalen einer oder mehrerer ihrer Ausführungen gestaltet ist.

Weitere vorteilhafte Ausgestaltungen der Verwendung der Universalmaschine für die Nahrungsund Lebensmittelbe- und -verarbeitung zum Be- und Verarbeiten von Schokolade ergeben sich aus der entsprechenden Umsetzung der vorstehenden Ausgestaltungen der Vorrichtung zum Beund Verarbeiten von Schokolade.

Weitere bevorzugte und/oder vorteilhafte Ausgestaltungen der Erfindung und ihrer einzelnen Aspekte ergeben sich aus den Kombinationen einzelner Ansprüche sowie den gesamten vorliegenden Anmeldungsunterlagen.

Die Erfindung wird anhand von Ausführungsbeispielen nachfolgend unter Bezugnahme auf die Zeichnung lediglich exemplarisch näher erläutert, in der
- Fig. 1: in einer schematischen Querschnittsansicht ein erstes Ausführungsbeispiel einer Vorrichtung zum Be- und Verarbeiten von Schokolade veranschaulicht ist,
- Fig. 2: das erste Ausführungsbeispiel der Vorrichtung zum Be- und Verarbeiten von Schokolade aus der Fig. 1 in einer gegenüber der Ansicht in der Fig. 1 etwas gedrehten Stellung schematisch gezeigt ist,
- Fig. 3: in einer schematischen Querschnittsansicht ein zweites Ausführungsbeispiel einer Vorrichtung zum Be- und Verarbeiten von Schokolade veranschaulicht ist,
- Fig. 4: in einer schematischen teilweisen Schnittansicht ein drittes Ausführungsbeispiel einer Vorrichtung zum Be- und Verarbeiten von Schokolade veranschaulicht ist,
- Fig. 5: in einer schematischen teilweisen Schnittansicht ein viertes Ausführungsbeispiel einer Vorrichtung zum Be- und Verarbeiten von Schokolade veranschaulicht ist,
- Fig. 6: in einer schematischen teilweisen Schnittansicht ein fünftes Ausfuhrungsbeispiel einer Vorrichtung zum Be- und Verarbeiten von Schokolade veranschaulicht ist,
- Fig. 7: in einer schematischen teilweisen Schnittansicht ein sechstes Ausführungsbeispiel einer Vorrichtung zum Be- und Verarbeiten von Schokolade veranschaulicht ist,
- Fig. 8: in einer schematischen teilweisen Schnittansicht ein siebtes Ausführungsbeispiel einer Vorrichtung zum Be- und Verarbeiten von Schokolade veranschaulicht ist,
- Fig. 9: in einer schematischen teilweisen Schnittansicht ein achtes Ausführungsbeispiel einer Vorrichtung zum Be- und Verarbeiten von Schokolade veranschaulicht ist,
- Fig. 10a: in einer schematischen teilweisen Draufsicht ein neuntes Ausführungsbeispiel einer Vorrichtung zum Be- und Verarbeiten von Schokolade veranschaulicht ist,
- Fig. 10b: in einer schematischen teilweisen Draufsicht ein zehntes Ausführungsbeispiel einer Vorrichtung zum Be- und Verarbeiten von Schokolade veranschaulicht ist, und
- Fig. 11: in einer schematischen teilweisen Schnittansicht ein elftes Ausfuhrungsbeispiel einer Vorrichtung zum Be- und Verarbeiten von Schokolade veranschaulicht ist.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die Merkmalskombinationen innerhalb eines Ausführungs- und Anwendungsbeispiels beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

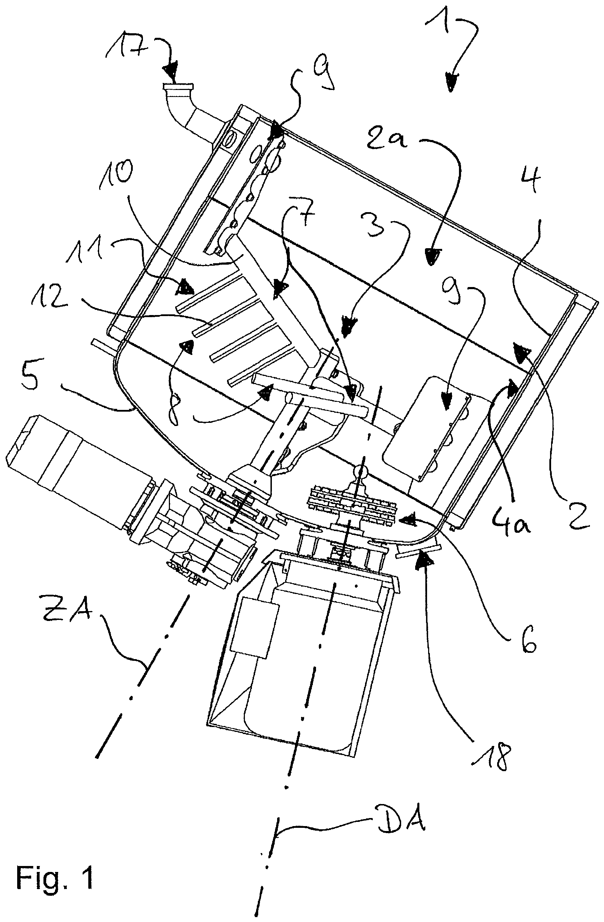

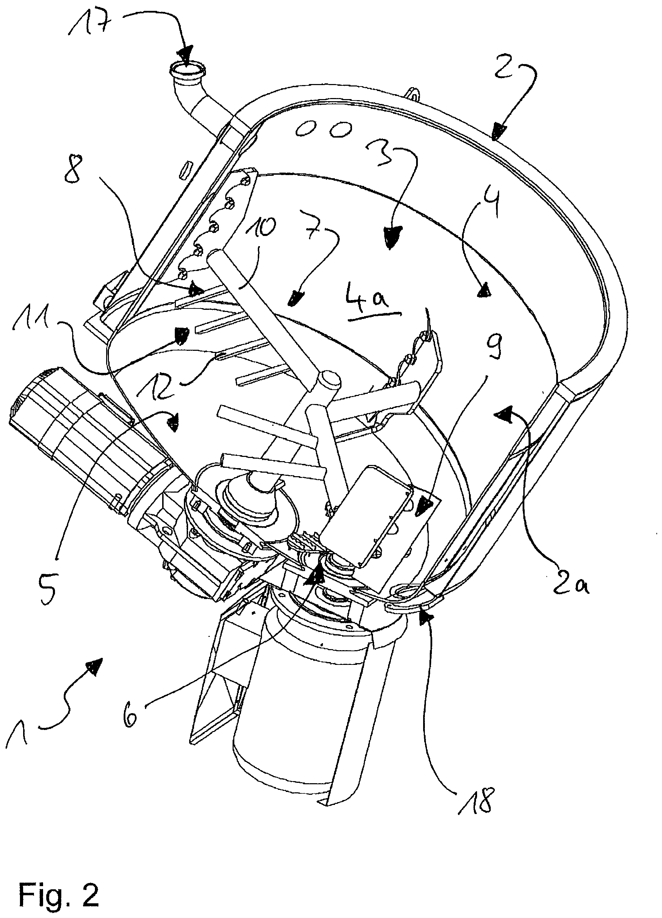

In den Fig. 1 und 2 ist ein erstes Ausfuhrungsbeispiel einer Vorrichtung 1 zum Be- und Verarbeiten von Schokolade in Schnittzeichnungen schematisch veranschaulicht. Die Vorrichtung 1 zum Be- und Verarbeiten von Schokolade basiert auf einer Universalmaschine zum Behandeln allgemein von Nahrungsmitteln und Speisen und enthält einen Behälter 2 und darin angeordnete Rühreinrichtungen 3. Der Behälter 2 hat einen Bearbeitungsinnemaum 2a, der durch eine zylindrische Wand 4 und einen nach außen gewölbten Boden 5 bestimmt ist, und ist schräg aufgestellt, d.h. dass die Zentralachse ZA der zylindrischen Wand 4 oder eben des Behälters 2 gegenüber einer Senkrechten auf dem Untergrund, auf dem die Vorrichtung 1 steht, oder eben gegenüber der Vertikalen geneigt ist.

Die Rühreinrichtungen 3 enthalten ein Conchierwerkzeug 6, das am oder nahe dem Boden 5 oder Bezüglich der Vertikalen tiefsten Punkt des Bearbeitungsinnenraums 2a des Behälters 2 drehbar angeordnet ist, und wenigstens einen Rührarm 7, der um die zur zylindrischen Wand 4 parallele Zentralachse drehbar ist, von der er zumindest auch in radialer Richtung vorsteht. Das Conchierwerkzeug 6 dreht sich im Betrieb schneller als der Rührarm 7.

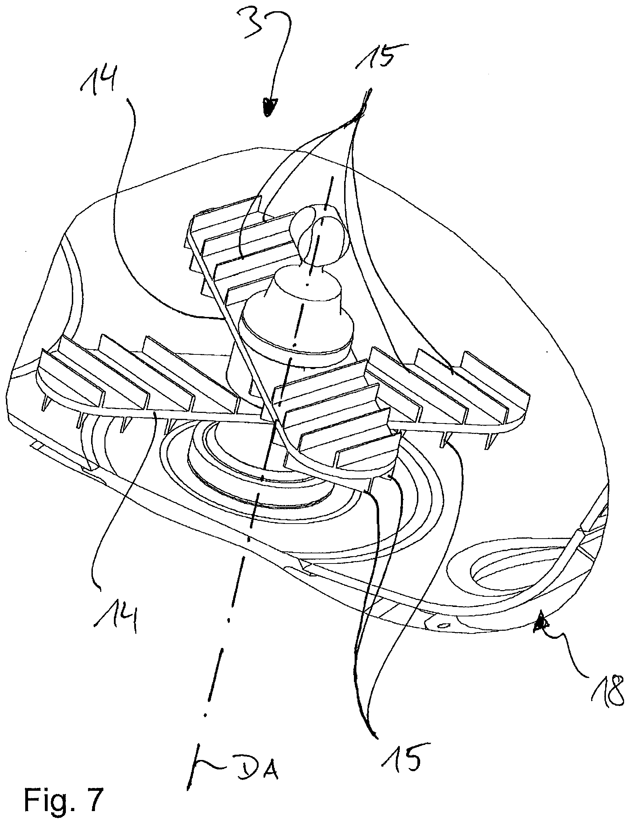

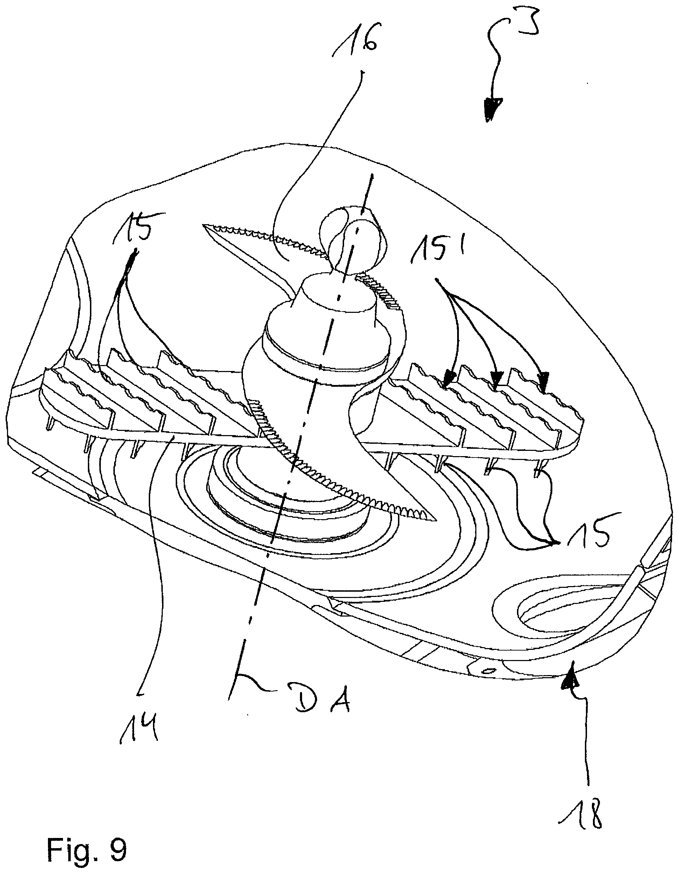

Das schnelllaufende Conchierwerkzeug 6, von dem einige Ausgestaltungen später unter Bezugnahme auf die Figuren 7 bis 11 näher erläutert werden, sorgt für einen schnellen und hohen Eintrag von Reibungs- und Scherenergie und damit eine Erwärmung und Verflüssigung (Schmelzen) der Schokoladenmasse. Für die Behandlung anderer Nahrungsmittel und Rohstoffe als Schokolade kann das Conchierwerkzeug 6 auf einfache Weise z.B. durch ein Messer (vgl. z.B. Fig. 9) ersetzt werden. Der Rührarm 7 ist in Zusammenhang mit dem schrägstehenden Behälter 2 zuständig für das Mischen, Kneten (Schwappen) und Belüften der Schokoladenmasse, kann aber ohne weitere Veränderungen auch zum Mischen, Kneten (Schwappen) und Belüften anderer Nahrungsmittel und Rohstoffe verwendet werden. Die Produktmasse oder Schokoladenmasse oder Teile davon werden über jeden Rührarm 7 gehoben und fallen durch die Schwerkraft wieder in die Restmasse zurück.

Es sind mehrere Rührarme 7, insbesondere drei Rührarme 7 umfangsmäßig vorzugsweise gleichverteilt enthalten Jeder Rührarm 7 ist mit Misch-/Zerteilwerkzeugen 8 versehen ist, die aus der Drehebene des Rührarms 7 vorstehen. Ferner enthält jeder Rührarm 7 an seinem achsenfernen Ende einen Abstreifer 9, der an der Innenseite 4a der zylindrischen Wand 4 entlangstreift und in dem Behälter 2 oder genauer dessen Bearbeitungsinnenraum 2a enthaltenes Produkt und ggf. Schokoladenmasse von dieser Innenseite 4a der zylindrischen Wand 4 abstreift oder abschabt.

Durch die Misch-/Zerteilwerkzeuge 8 und/oder den Abstreifer 9 wird in Zusammenhang mit dem schrägstehenden Behälter 2 das Mischen, Kneten (Schwappen) und Belüften der Schokoladenmasse durch die Drehbewegung jedes Rührarms 7 weiter verbessert, kann aber ohne weitere Veränderungen auch zum Mischen, Kneten (Schwappen) und Belüften anderer Nahrungsmittel und Rohstoffe verwendet werden. Die Produktmasse oder Schokoladenmasse oder Teile davon werden zusätzlich über die Mischwerkzeuge 8 und Abstreifer oder Abstreiferpaddel 9 gehoben und fallen durch die Schwerkraft wieder in die Restmasse zurück.

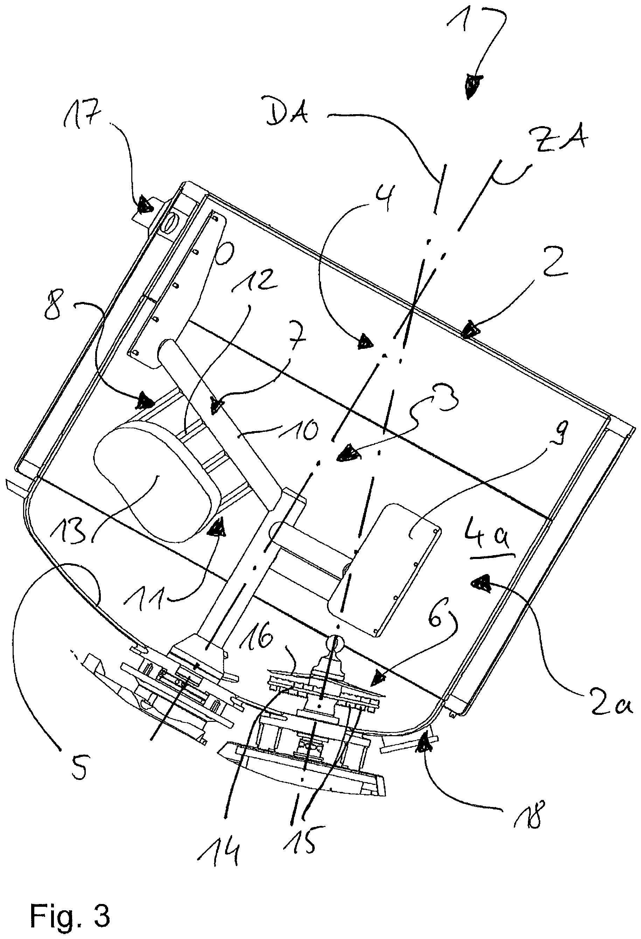

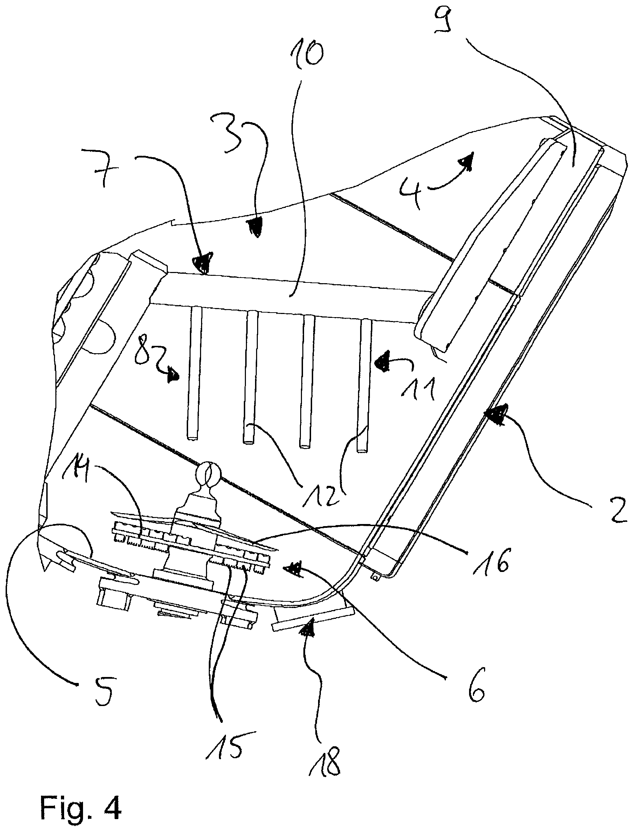

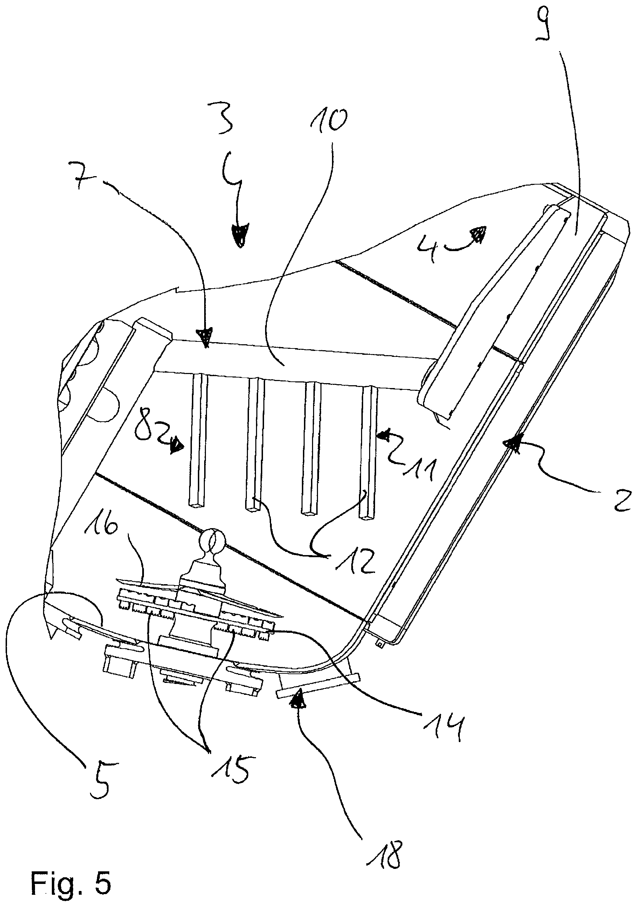

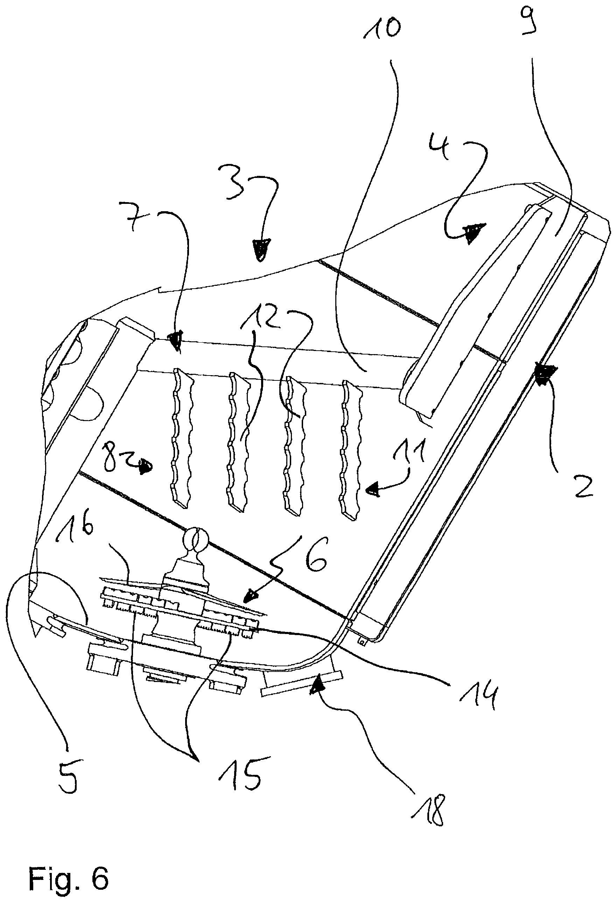

In den Figuren 3 bis 6 sind zweite bis fünfte Ausführungsbeispiele der Vorrichtung 1 zum Beund Verarbeiten von Schokolade in teilweisen Schnittzeichnungen schematisch veranschaulicht. Bei dem zweiten Ausführungsbeispiel der Vorrichtung 1 zum Be- und Verarbeiten von Schokolade gemäß der Fig. 3 stehen von im Wesentlichen zur Zentralachse radial - konkret können die Richtungen zum Radius auch unter einem Winkel insbesondere bezogen auf die Richtung der Zentralachse schräg verlaufen - verlaufenden Stangen 10 der Rührarme 7 bezüglich den Stangen 10 wiederum radial kammartige Mischer 11 vor, die jeweils aus einer Mehrzahl von Stäben 12 bestehen und an deren jeweils von den Stangen 10 abgewandten Enden ein Misch- oder Rührkörper 13 sitzt. Bei dem dritten Ausführungsbeispiel der Vorrichtung 1 zum Be- und Verarbeiten von Schokolade gemäß der Fig. 4 enthält haben die Stäbe 12 des Mischers 11 einen runden Querschnitt, und bei dem vierten Ausführungsbeispiel der Vorrichtung 1 zum Be- und Verarbeiten von Schokolade gemäß der Fig. 5 enthält haben die Stäbe 12 des Mischers 11 einen eckigen, wie insbesondere rechteckigen und hier speziell quadratischen Querschnitt. Die Stäbe 12 des Mischers 11 bei dem fünften Ausführungsbeispiel der Vorrichtung 1 zum Be- und Verarbeiten von Schokolade gemäß der Fig. 6 sind die Stäbe 12 des Mischers 11 klingenartig und haben konturierte Kanten.

Bevorzugt sind die Misch-/Zerteilwerkzeuge 8 so ausgestaltet und/oder montiert und/oder gesteuert, dass im Weg der Drehbewegung der Rührarme 7 keine Gefahr einer Kollision mit dem Conchierwerkzeug 6 besteht.

Unter Bezugnahme wieder auf die Fig. 1 und 2 enthält das Conchierwerkzeug 6 eine drehbare Klinge 14, an der weiter bevorzugt Rippengestaltungen oder Rippen 15 vorgesehen sind, die aus der Drehebene des Conchierwerkzeugs 6 vorstehen. Die Rippen 15 sind zur Tangente an jedem von ihnen bei der Drehbewegung der Klinge 14 beschriebenen Kreis unter einem Winkel, insbesondere einem spitzen Winkel angeordnet, so dass sie bei der Drehung der Klinge 14 die sie umgebende Schokoladenmasse radial auswärts drängen. Dies ist besonders gut bei der teilweisen schematischen Schnittdarstellung des sechsten Ausführungsbeispiels in der Fig. 7 zu sehen. Weiter unter Bezugnahme auf die vergrößerte Ausschnitts- und Einzeldarstellung des Conchierwerkzeugs 6 im Rahmen des sechsten Ausführungsbeispiels gemäß der Fig. 7 verläuft die Klinge 14 des Conchierwerkzeugs 6 beiderseits ihrer Drehachse und sind zwei Klingen 14 in einer Kreuzanordnung enthalten und angeordnet, insbesondere längs der Drehachse DA des Conchierwerkzeugs 6 versetzt oder benachbart.

Wie besonders gut den Fig. 1 bis 3 zu entnehmen ist, sind die Drehachsen von Conchierwerkzeug 6 (Drehachse DA) und Rührarme(n) 7 (Zentralachse ZA) nicht parallel, sondern verlaufen unter einem insbesondere spitzen Winkel zueinander. Ferner ist das Conchierwerkzeug 6 tiefer in dem Behälter 2 angeordnet als jeder Rührarm 7, und zwar am oder nahe dem bezüglich der Vertikalen tiefsten Punkt im Bearbeitungsinnenraum 2a des Behälters 2.

In den Fig. 7 bis 11 sind weitere Ausfuhnmgsbeispiele der Vorrichtung 1 zum Be- und Verarbeiten von Schokolade in teilweisen Schnittzeichnungen schematisch veranschaulicht. Im Speziellen unterscheiden sich diese sechsten bis zehnten Ausfübrungsbeispiele durch die Gestaltung des Conchierwerkzeugs 6.

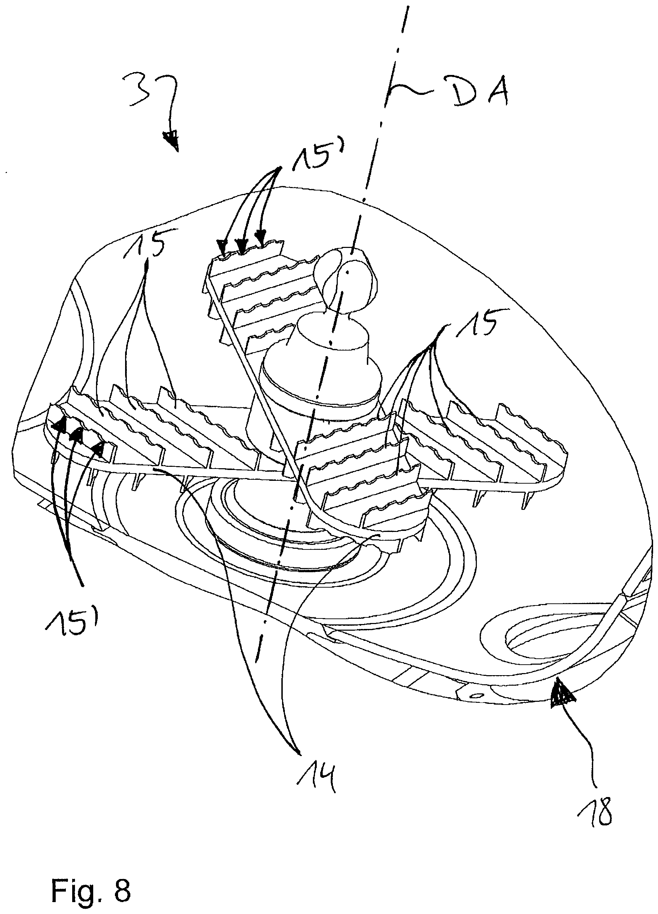

Die Variante des sechsten Ausführungsbeispiels gemäß der Fig. 7 wurde bereits vorher näher beschrieben. Im Unterschied zu diesem sechsten Ausführungsbeispiel, bei dem die Rippen- oder Steggestaltungen 15 in ihrem Längsverlauf plan sind und auch glatte von der jeweiligen Klinge 14 weg weisende Ränder haben, sind diese Ränder bei dem siebten Ausführungsbeispiel gemäß der Fig. 8 profiliert, indem Ausnehmungen oder Einbuchtungen 15' vorgesehen sind, wodurch höhere Scherwirkungen bei der zu behandelnden Schokolade erreicht werden. Bei dem achten Ausführungsbeispiel der Vorrichtung 1 zum Be- und Verarbeiten von Schokolade gemäß der Fig. 9 ist eine Klinge 14 mit einem kreuzweise dazu stehenden Messer 16 kombiniert, um das Conchierwerkzeug 6 zu bilden.

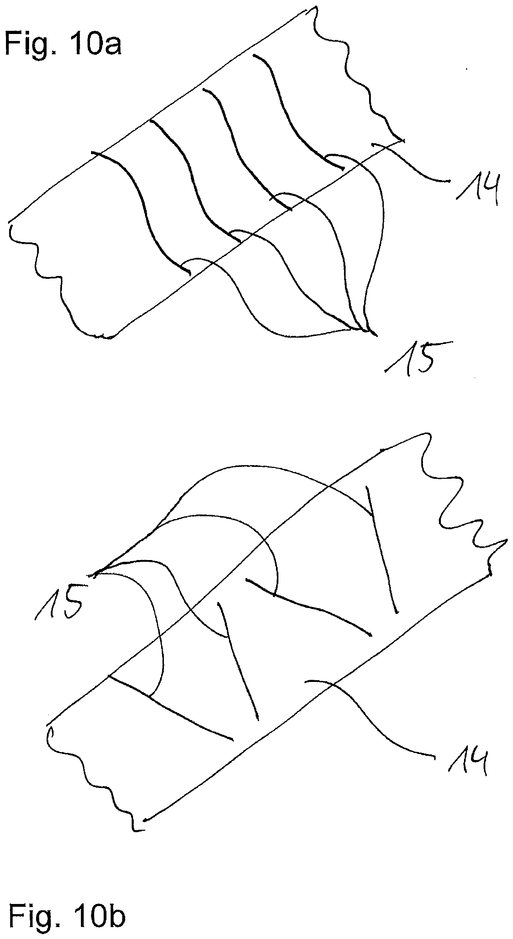

Grundsätzlich können die Rippen- oder Steggestaltungen 15 in ihrem Längsverlauf plan, wellig oder gestuft sein und/oder glatte oder profilierte freie von der jeweiligen Klinge 14 weg weisende Ränder haben, wie beispielsweise mit den Ausnehmungen oder Einbuchtungen 15'. Noch weiter können die Rippen 15 parallel oder unter Winkeln zu einander angeordnet sein. Ein Beispiel für wellenförmige Rippen- oder Steggestaltungen 15 zeigt die schematische Darstellung des neunten Ausführungsbeispiels in der Fig. 10a, und ein Beispiel für unter Winkeln zu einander angeordnete Rippen 15 zeigt die schematische Darstellung des zehnten Ausführungsbeispiels in der Fig. 10b.

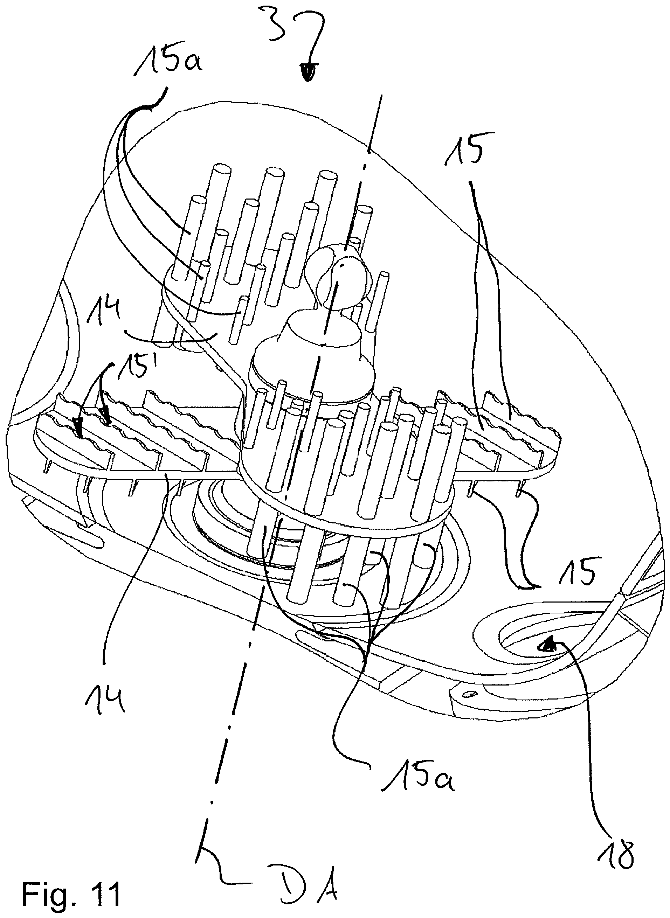

Die Fig. 11 veranschaulicht in einer schematischen teilweisen Schnittansicht ein elftes Ausführungsbeispiel einer Vorrichtung zum Be- und Verarbeiten von Schokolade. Hierbei weisen die beiden Klingen 14, von denen jede sich beiderseits der Drehachse DA des Conchierwerlezeugs 6 als entsprechende Klingenarme 14a erstrecken, unterschiedliche Ausgestaltungen auf. Die in der Fig. 11 untere Klinge 14 ist, wie beim siebten Ausführungsbeispiel gemäß der Fig. 8, mit Rippenoder Steggestaltungen 15 versehen, deren von der jeweiligen Klinge 14 weg weisenden Ränder profiliert sind, indem Ausnehmungen 15' vorgesehen sind. Konkret ist die Form bei dieser Gestaltung wie der Verlauf einer "Rechteckwelle" zu verstehen, könnte aber auch jede andere gestufte oder kontinuierliche gleichmäßige oder zufällige Ausgestaltung von Ausnehmungen oder Einbuchtungen 15' enthalten. Die andere, in der Fig. 11 obere Klinge ist mit Zapfen 15a versehen, die zylindrisch sind und parallel zur Drehachse der Klingen 14 vorstehen. Dabei sind die Zapfen 15a im Bereich jedes der freien Enden der Klinge 14 beiderseits deren Drehachse länger und dicker als die Zapfen 15a im Bereich jeweils der Mitte jedes der beiden Klingenarme 14a, und schließlich sind die die Zapfen 15a, die der Drehachse DA am nächsten sind, kürzer und dünner als die Zapfen 15a im Bereich jeweils der Mitte jedes der beiden Klingenanne 14a,

Ferner zeigen die Abbildungen der einzelnen Ausfilhrungsbeispiele in den Fig. 7 bis 11, dass die Klingen 14 die Steggestaltungen 15 und/oder Zapfen 15a vorzugsweise auf jeder ihrer beiden flachen Seiten enthalten, und dass die Verläufe der Steggestaltungen 15 und/oder Anordnungen und Gestaltungen der Zapfen 15a ggf, auf den beiden flachen Seiten jeder Klinge anders geartet sind, wie bezüglich den Steggestaltungen 15 wechselseitig anders schräg stehen oder zur Tangente am jeweiligen freien Ende der Klinge 14 in anderen Richtungen geneigt sind, wobei die konkrete Schrägstellung so gewählt ist, dass das Scheren der Schokoladenmasse oberhalb und unterhalb jeder Klinge 14 optimiert wird.

Vorteilhafterweise enthält der Behälter 2 auch einen zwischen einer Schließstellung und Offenstellungen verstellbaren Deckel (nicht dargestellt), der ein dichtes Abschließen des Behälters 2 ermöglicht, so dass Einflüsse von Außenluft, Außentemperatur u.a. reduziert oder vermieden werden können. Eine Beschickung des Behälters 2 der Vorrichtung 1 zum Be- und Verarbeiten von Schokolade erfolgt über ggf. den geöffneten Deckel oder Zufuhrsysteme 17. Die Entleerung wird bevorzugt über ein Bodensitzventil 18 im oder nahe am Boden 5 des Behälters 2 erreicht. Über eine Vakuumanlage (nicht dargestellt) können dem Produkt Geruchs-, Bitter- und Aromakomponenten entzogen werden. Auch kann der Behälter 2 heizbar oder allgemein temperierbar sein. Für jegliche Komponenten und Funktionen der Vorrichtung können Steuerungen oder eine zentrale Steuerung (nicht dargestellt) vorgesehen sein.

Für die Drehbewegungen von Conchierwerkzeug 6 und Rührarmen 7 sorgen entsprechend angeordnete und angeschlossene Motoren, wie insbesondere Elektromotoren, die für den Fachmann in den Figuren ohne weiteres zu erkennen sind und vorteilhafterweise über ggf. vorhandene Steuereinrichtungen passend zum Produkt und Prozess gesteuert werden, für das bzw. den die Vorrichtung 1 verwendet werden soll.

Die Vorrichtung 1 zum Be- und Verarbeiten von Schokolade basiert vorteilhafterweise und gemäß einem Aspekt der vorliegenden Erfindung auf einer Universalmaschine, von der nachfolgend beispielhaft einige weitere Merkmale aufgeführt werden. Solche Universalmaschine sind konzipiert z.B. für die rationelle und wirtschaftliche Produktion von Dressings, pürierter Kost und Babyfood, sowie auch für Brotaufstriche, Leberpasteten und Schmelzkäse sowie Pasten, Fleischemulsionen u.dgl. Sie decken üblicherweise ein großes Prozessspektrum, einschließlich beispielsweise Zerkleinern, Dispergieren und Emulgieren, auch unter Vakuum und bevorzugt zusätzlich beispielsweise ergänzt mit Direktdampferhitzung oder anderen Heiz- sowie auch Kühlmöglichkeiten.

Entsprechend kann in besonders vorteilhafter Weise also eine Universalmaschine für die Nahrungs- und Lebensmittelbe- und -verarbeitung, als Vorrichtung 1 zum Be- und Verarbeiten von Schokolade verwendet werden, wobei die Universalmaschine einen Behälter 2 und darin angeordnete Rühreinrichtungen 3 enthält, wobei der Behälter 2 einen Bearbeitungsinnenraum 2a mit einer zylindrischen Wand 4 und einem nach außen gewölbten Boden 5 hat und schräg aufgestellt ist, d.h. die Zentralachse ZA der zylindrischen W and 4 ist gegenüber der Vertikalen geneigt, und wobei die Rühreinrichtungen 3 wenigstens einen Rührarm 7 enthalten, der von der Zentralachse ZA des zylindrischen Behälters 2 zumindest auch in radialer Richtung vorstehend um die Zentralachse ZA der zylindrischen Wand drehbar ist Erfindungsgemäß ist dabei weiter vorgesehen, dass die Rühreinrichtungen 3 ferner ein Conchierwerkzeug 6 enthalten, das am oder nahe dem Boden 5 des Behälters, insbesondere am oder nahe dem bezüglich der Vertikalen tiefsten Punkt des Behälters 2 drehbar angeordnet ist und sich im Betrieb schneller dreht als der Rührarm,

Die übrigen bevorzugten und vorteilhaften Ausgestaltungen ergeben sich aus den Ausführungsbeispielen gemäß den Figuren 1 bis 11.

Für alle Ausführungsbeispiele und für die erfindungsgemäße Vorrichtung zum Be- und Verarbeiten von Schokolade sowie das diesbezügliche Verfahren und die entsprechende Verwendung einer Universalmaschine werden nachfolgend noch einige weitere Ausgestaltungen angegeben.

Die vorliegende Erfindung nutzt in geschickter Weise insbesondere die Kombination von schnelllaufendem Conchierwerkzeug 6 (insbesondere dessen Drehzahl bis 3600 U/mm - konzentrierter Eintrag von Scherenergie) und langsamen Mischwerkzeug (Mischen, Scheren, Kneten - Schwappen), sowie schräg (unter einem bestimmten Winkel) stehendem Behälter. Eine Drehzahl des Conchierwerkzeugs 6 von 100 U/min und mehr, insbesondere 500 U/min und mehr, speziell 1000 U/min und mehr wird im Sinne der vorliegenden Anmeldung als schnelllaufend bezeichnet. Die vorgenannte beispielhafte maximale Drehzahl von bis zu 3600 U/min für das Conchierwerkzeug 6 hat sich bei Versuchen mit einigen spezifischen Anordnungen und Maschinen ergeben. Aus Versuchen wurde in diesem Zusammenhang ferner ermittelt, dass sich für das abschließende Conchen Drehzahlen des Conchierwerkzeugs 6 zwischen von ca. 500 bis etwa 1500 U/min je nach Zustand und Zusammensetzung einer konkreten Schokoladenmasse oder Schokolade als optimal erwiesen haben.

Das Conchierwerkzeug 6 sorgt für den schnellen und hohen Eintrag von Reibungs- und Scherenergie und damit für die Erwärmung und Verflüssigung der Produktbestandteile hauptsächlich während des stetigen Umwälzens des noch feinkrümeligen Walzgutes, wobei Reibungswärme entsteht und eine zusätzliche Beheizung erfolgt, und während der darauf folgenden Zugabe von insbesondere Kakaobutter, um die Masse noch fließfähiger zu machen. Wenn durch das Conchieren die Temperatur ca. 90 °C erreicht hat und eine pastöse Masse entstanden ist, erfolgt eine Reduzierung der Drehzahl, um einen Anstieg der Produkttemperatur > 92°C zu verhindern.

Das "langsame Mischwerkzeug" in Form der Rührarme 7 mit verschiedenen Ausgestaltungsmöglichkeiten, insbesondere wie oben unter Bezugnahme auf die Figuren der Zeichnung beschrieben, führen beim stetigen Umwälzen des noch feinkrümeligen Walzgutes und während der darauf folgenden Zugabe von insbesondere Kakaobutterdie Rezepturbestandteile dem Conchierwerkzeug 6 zu (übliche Drehzahl für die Rührarme 7: 10 bis 15 U/min) und übernimmt dann durch Scheren des Produktes an Wand 4, Boden 5 und Conchierwerkzeug 6 und Kneten durch "Herabfallen" (infolge des schrägstehenden Behälters) beim weiteren Conchieren und Zugeben von insbesondere Kakaobutter und Lezithin sowie Schwappen (während der Zugabe von insbesondere Kakaobutter und Lezithin zur Erhöhung der Fließfähigkeit und dann Verflüssigungsphase) die weitere Conchierleistung mit Drehzahlen der Rührarme 7 bis zu 50 U/min, insbesondere 20 bis 30 U/min, Konkret bedeutet dies, dass die Drehzahlen für die Rührarme 7 bei maximal 50 U/min liegen und dagegen die Drehzahl des schnelllaufendem Conchierwerkzeugs 6 von 100 U/min, vorzugsweise von 500 U/min aufwärts liegt.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen im Rahmen der Ansprüche und der allgemeinen Darstellungen in der Einleitung dieser Beschreibung sowie der Beschreibung und Zeichnung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Ausführungsbeispiele untereinander kombinierbar.

### Bezugszeichenliste

- 1: Vorrichtung zum Be- und Verarbeiten von Schokolade
- 2: Behälter
- 2a: Bearbeitungsinnenraum
- 3: Rühreinrichtungen
- 4: Wand
- 4a: Innenseite der zylindrischen Wand
- 5: Boden
- 6: Conchierwerkzeug
- 7: Rührarm
- 8: Misch-/Zerteilwerkzeuge
- 9: Abstreifer
- 10: Stangen
- 11: Mischer
- 12: Stäbe
- 13: Rührkörper
- 14: Klinge
- 14a: Klingenarme
- 15: Rippen
- 15': Ausnehmungen oder Einbuchtungen
- 15a: Zapfen
- 16: Messer
- 17: Zuführsystem
- 18: Bodensitzventil
- ZA: Zentralachse des Behälters bezogen auf die zylindrische Wand und Drehachse der Rühreinrichtungen
- DA: Drehachse des Conchierwerkzeugs

## Patentansprüche

1. Vorrichtung (1) zum Be- und Verarbeiten von Schokolade, mit einem Behälter (2) und darin angeordneten Rühreinrichtungen (3), wobei der Behälter (2) einen Bearbeitungsinnenraum (2a) mit einer zylindrischen Wand (4) und einen nach außen gewölbten Boden (5) hat, wobei die Rühreinrichtungen (3) wenigstens einen Rührarm (7), der von der Zentralachse (ZA) des zylindrischen Behälters (4) zumindest auch in radialer Richtung vorstehend um diese Zentralachse (ZA) drehbar ist, und ein Conchierwerkzeug (6) enthalten, das am oder nahe dem Boden (5) oder des bezogen auf die Vertikale tiefsten Punktes des Behälters (2) um eine Drehachse (DA) drehbar angeordnet ist, und wobei sich das Conchierwerkzeug (6) im Betrieb schneller dreht als der Rührarm (7),
**dadurch gekennzeichnet,**
**dass** der Behälter (2) schräg aufgestellt ist, d.h. die Zentralachse (ZA) der zylindrischen Wand (4) gegenüber der Vertikalen geneigt ist, und dass das Conchierwerkzeug (6) eine drehbare Klinge (14) enthält.

2. Vorrichtung nach Anspruch 1, wobei die Drehachse (DA) des Conchierwerkzeugs (6) und die Drehachse des Rührarms oder der Rührarme (7), die mit der Zentralachse des Behälters zusammenfällt, nicht parallel sind.

3. Vorrichtung nach Anspruch 1 oder 2, wobei das Conchierwerkzeug (6) tiefer in dem Behälter angeordnet ist als jeder Rührarm, insbesondere das Conchierwerkzeug (6) in dem schrägstehenden Behälter (2) am oder nahe dem tiefsten Punkt bezogen auf die Vertikale angeordnet ist.

4. Vorrichtung nach einem der vorhergehenden Ansprüche, wobei mehrere Rührarme (7), insbesondere drei Rührarme (7) umfangsmäßig insbesondere gleichverteilt enthalten sind.

5. Vorrichtung nach einem der vorhergehenden Ansprüche, wobei jeder Rührarm (7) mit Misch-/Zerteilwerkzeugen (8) versehen ist, die aus der Drehebene des Rührarms (7) vorstehen.

6. Vorrichtung nach einem der vorhergehenden Ansprüche, wobei jeder Rührarm (7) an seinem achsenfernen Ende einen Abstreifer (9) enthält, der insbesondere ausgelegt ist, um an der Innenseite (4a) der zylindrischen Wand (4) entlang zu streifen und in dem Behälter (2) enthaltenes Produkt von dieser Innenseite (4a) der zylindrischen Wand (4) abzustreifen oder abzuschaben.

7. Vorrichtung einem der vorhergehenden Ansprüche, wobei an der Klinge (14) Rippen- oder Steggestaltungen oder Rippen (15) vorgesehen sind, die aus der Drehebene des Conchierwerkzeugs (6) vorstehen.

8. Vorrichtung nach Anspruch 7, wobei die Rippen (15) zur Tangente an jedem von ihnen bei der Drehbewegung der Klinge (14) beschriebenen Kreis unter einem Winkel, insbesondere einem spitzen Winkel angeordnet sind, so dass sie bei der Drehung der Klinge (14) die sie umgebende Schokoladenmasse radial auswärts drängen.

9. Vorrichtung nach Anspruch 7 oder 8, wobei die Rippen- oder Steggestaltungen (15) in ihrem Längsverlauf plan, wellig oder gestuft sein und/oder glatte oder profilierte freie von der jeweiligen Klinge (14) weg weisende Ränder haben.

10. Vorrichtung nach einem der Ansprüche 7 bis 9, wobei die Rippen (15) parallel oder unter Winkeln zu einander angeordnet sind.

11. Vorrichtung nach einem der Ansprüche 7 bis 10, wobei die Klinge (14) des Conchierwerkzeugs (6) beiderseits ihrer Drehachse (DA) verläuft und vorzugsweise diametral von letzterer weg verlaufende Klingenarme (14a) enthält.

12. Vorrichtung nach einem der Ansprüche 7 bis 11, wobei zwei Klingen (14) insbesondere in einer Kreuzanordnung enthalten sind und vorzugsweise in axialer Richtung der Drehachse (DA) des Conchierwerkzeugs (6) beabstandet oder benachbart angeordnet sind,

13. Verfahren zum Be- und Verarbeiten von Schokolade, wobei eine Ausgangsmasse oder ein Zwischenprodukt von Schokolade in einen zylindrischen Behälter (2) gefüllt und darin einerseits mit wenigstens einem Rührarm (7), der sich von der Zentralachse (ZA) des zylindrischen Behälters (2) zumindest auch in radialer Richtung vorstehend um diese Zentralachse (ZA) dreht, und andererseits gleichzeitig mittels eines drehbaren Conchierwerkzeugs (6) bearbeitet wird, das sich um eine gegenüber der Zentralachse (ZA) des zylindrischen Behälters (2) geneigte Drehachse (DA) schneller als der wenigstens eine Rührarm (7) dreht, **dadurch gekennzeichnet, dass** der Behälter (2) schräg aufgestellt ist, d.h. die Zentralachse (ZA) der zylindrischen Wand (4) gegenüber der Vertikalen geneigt ist, und dass das Conchierwerkzeug (6) eine drehbare Klinge (14) enthält.

14. Verfahren nach Anspruch 13, wobei eine Vorrichtung nach einem der Ansprüche 2 bis 12 eingesetzt wird.

15. Verwendung einer Universalmaschine für die Nahrungs- und Lebensmittelbe- und -verarbeitung, zum Be- und Verarbeiten von Schokolade, **dadurch gekennzeichnet, dass** die Universalmaschine gemäß der Vorrichtung nach einem der Ansprüche 1 bis 12 gestaltet ist.

## Claims

1. Device (1) for working and processing chocolate, comprising a container (2) and stirring means (3) arranged therein, the container (2) having a container interior (2a), with a cylindrical wall (4), and an outwardly curved base (5), the stirring means (3) including at least one stirring arm (7), which is rotatable about the central axis (ZA) of the cylindrical container (4) while also protruding from said central axis (ZA) at least in a radial direction, and a conching tool (6), which is arranged, rotatable about an axis of rotation (DA), at or close to the base (5) or to the vertically lowest point of the container (2), and the conching tool (6) rotating more rapidly in operation than the stirring arm (7),
**characterised**
**in that** the container (2) is set up obliquely, in other words the central axis (ZA) of the cylindrical wall (4) is at an inclination to the vertical, and in that the conching tool (6) includes a rotatable blade (14).

2. Device according to claim 1, wherein the axis of rotation (DA) of the conching tool (6) and the axis of rotation of the stirring arm or stirring arms (7), which is coincident with the central axis of the container, are not parallel.

3. Device according to either claim 1 or claim 2, wherein the conching tool (6) is arranged lower in the container than each stirring arm, the conching tool (6) in particular being arranged in the obliquely standing container (2) at or close to the vertically lowest point.

4. Device according to any of the preceding claims, wherein a plurality of stirring arms (7), in particular three stirring arms (7), are included in particular in a circumferentially evenly distributed manner.

5. Device according to any of the preceding claims, wherein each stirring arm (7) is provided with mixing/fragmenting tools (8), which protrude from the plane of rotation of the stirring arm (7).

6. Device according to any of the preceding claims, wherein each stirring arm (7) includes, at the end thereof remote from the axis, a scraper (9) which is configured in particular to scrape along on the inner face (4a) of the cylindrical wall (4) and to scrape off or wipe off product contained in the container (2) from said inner face (4a) of the cylindrical wall (4).

7. Device according to any of the preceding claims, wherein rib or web shapes or ribs (15) are provided on the blade (14) and protrude from the plane of rotation of the conching tool (6).

8. Device according to claim 7, wherein the ribs (15) are arranged at an angle, in particular an acute angle, to the tangent to each circle described thereby during the rotational movement of the blade (14), in such a way that they urge the surrounding chocolate mass radially outwards when the blade (14) rotates.

9. Device according to either claim 7 or claim 8, wherein the rib or web configurations (15) are planar, undulating or stepped in the longitudinal extension thereof and/or have smooth or profiled free edges facing away from the associated blade (14).

10. Device according to any of claims 7 to 9, wherein the ribs (15) are arranged parallel or at angles to one another.

11. Device according to any of claims 7 to 10, wherein the blade (14) of the conching tool (6) extends on both sides of the axis of rotation (DA) thereof and preferably includes blade arms (14a) extending diametrically away from said axis.

12. Device according to any of claims 7 to 11, wherein two blades (14) are included in particular in a cross arrangement and are preferably arranged spaced apart or adjacent in the axial direction of the axis of rotation (DA) of the conching tool (6).

13. Method for working and processing chocolate, wherein a chocolate starting mass or intermediate product is filled into a cylindrical container (2) and is processed therein both by at least one stirring arm (7), which rotates about the central axis (ZA) of the cylindrical container (2) while also protruding from said central axis (ZA) at least in a radial direction, and simultaneously by a rotatable conching tool (6), which rotates more rapidly than the at least one stirring arm (7) about an axis of rotation (DA) at an inclination to the central axis (ZA) of the cylindrical container (2), **characterised in that** the container (2) is set up obliquely, in other words the central axis (ZA) of the cylindrical wall (4) is at an inclination to the vertical, and **in that** the conching tool (6) includes a rotatable blade (14)..

14. Method according to claim 13, wherein a device according to any of claims 2 to 12 is employed.

15. Use of a universal machine for working and processing foods and foodstuffs to work and process chocolate, **characterised in that** the universal machine is configured in accordance with the device of any of claims 1 to 12.

## Revendications

1. Dispositif (1) de traitement et de transformation du chocolat, comportant un récipient (2) et des moyens de brassage (3) disposés dans celui-ci, le récipient (2) comportant un espace intérieur de traitement (2a) avec une paroi cylindrique (4) et un fond (5) bombé vers l'extérieur, les moyens de brassage (3) comprenant au moins un bras de brassage (7) qui fait saillie de l'axe central (ZA) au moins aussi dans la direction radiale et peut tourner autour de l'axe central (ZA) du récipient cylindrique (4), et un outil de conchage (6) qui est disposé de manière à pouvoir tourner autour d'un axe de rotation (DA) au niveau ou à proximité du fond (5) ou du point le plus bas du récipient (2) par rapport à la verticale, l'outil de conchage (6) tournant plus rapidement que le bras de brassage (7) pendant le fonctionnement,
**caractérisé en ce**
**que** le récipient (2) est disposé obliquement, c'est-à-dire que l'axe central (ZA) de la paroi cylindrique (4) est incliné par rapport à la verticale, et que l'outil de conchage (6) comporte une lame rotative (14).

2. Dispositif selon la revendication 1, dans lequel l'axe de rotation (DA) de l'outil de conchage (6) et l'axe de rotation du ou des bras de brassage (7) qui coïncide avec l'axe central du récipient ne sont pas parallèles.

3. Dispositif selon la revendication 1 ou 2, dans lequel l'outil de conchage (6) est disposé plus bas dans le récipient que tout bras de brassage, en particulier l'outil de conchage (6) est disposé dans le récipient incliné (2) au niveau ou à proximité du point le plus bas par rapport à la verticale.

4. Dispositif selon l'une des revendications précédentes, dans lequel plusieurs bras de brassage (7), en particulier trois bras de brassage (7) sont présents circonférentiellement, en particulier répartis de manière égale.

5. Dispositif selon l'une des revendications précédentes, dans lequel chaque bras de brassage (7) est muni d'outils de mélange/division (8) qui font saillie du plan de rotation du bras de brassage (7).

6. Dispositif selon l'une des revendications précédentes, **caractérisé en ce que** chaque bras de brassage (7) comporte, à son extrémité opposée à l'axe, un racleur (9) qui est conçu en particulier pour frotter le long du côté intérieur (4a) de la paroi cylindrique (4) et racler ou enlever le produit contenu dans le récipient (2) de ce côté intérieur (4a) de la paroi cylindrique (4).

7. Dispositif selon l'une des revendications précédentes, dans lequel des formations de type nervure ou ailette ou des nervures (15) sont prévues sur la lame (14), qui font saillie du plan de rotation de l'outil de conchage (6).

8. Dispositif selon la revendication 7, dans lequel les nervures (15) sont disposées selon un angle, en particulier un angle aigu, par rapport à la tangente à tout cercle décrit par elles lors du mouvement de rotation de la lame (14), de sorte qu'elles poussent radialement vers l'extérieur la masse de chocolat qui les entoure lors de la rotation de la lame (14).

9. Dispositif selon la revendication 7 ou 8, dans lequel les formations de type nervure ou ailette (15) sont planes, ondulées ou étagées dans leur extension longitudinale et/ou présentent des bords libres lisses ou profilés orientés à l'opposé de la lame respective (14).

10. Dispositif selon l'une des revendications 7 à 9, dans lequel les nervures (15) sont disposées parallèlement ou en angle les unes par rapport aux autres.

11. Dispositif selon l'une des revendications 7 à 10, dans lequel la lame (14) de l'outil de conchage (6) s'étend de part et d'autre de son axe de rotation (DA) et comporte de préférence des bras de lame (14a) s'étendant diamétralement à l'opposé de ce dernier.

12. Dispositif selon l'une des revendications 7 à 11, dans lequel deux lames (14) sont présentes en particulier dans une disposition en croix et sont de préférence espacées ou adjacentes dans la direction axiale de l'axe de rotation (DA) de l'outil de conchage (6).

13. Procédé de traitement et de transformation du chocolat, dans lequel une masse de départ ou un produit intermédiaire de chocolat est versé dans un récipient cylindrique (2) et y est traité, d'une part, avec au moins un bras de brassage (7) qui fait saillie de l'axe central (ZA) du récipient cylindrique (2) au moins aussi dans la direction radiale et tourne autour de cet axe central (ZA) et, d'autre part, est traité simultanément au moyen d'un outil de conchage rotatif (6) qui tourne plus vite que ledit au moins un bras de brassage (7) autour d'un axe de rotation (DA) incliné par rapport à l'axe central (ZA) du récipient cylindrique (2), **caractérisé en ce que** le récipient (2) est disposé obliquement, c'est-à-dire que l'axe central (ZA) de la paroi cylindrique (4) est incliné par rapport à la verticale, et que l'outil de conchage (6) comporte une lame rotative (14).

14. Procédé selon la revendication 13, dans lequel un dispositif selon l'une des revendications 2 à 12 est utilisé.

15. Utilisation d'une machine universelle pour le traitement et la transformation de denrées alimentaires, pour le traitement et la transformation du chocolat, **caractérisée en ce que** la machine universelle est conçue comme le dispositif selon l'une des revendications 1 à 12.
